Europäisches Patentamt

European Patent Office

Office européen des brevets

(19)

(11) Numéro de publication: **0 006 396**
**B1**

(12) **FASCICULE DE BREVET EUROPEEN**

(45) Date de publication du fascicule de brevet: **28.10.81**

(51) Int. Cl.³: **A 01 K 43/08, B 65 B 23/02**

(21) Numéro de dépôt: **79830017.4**

(22) Date de dépôt: **02.06.79**

(54) Machine à classer et à emballer les oeufs à balances fixes.

(30) Priorité: **12.06.78 IT 8339978**

(43) Date de publication de la demande:
**09.01.80 Bulletin 80/1**

(45) Mention de la délivrance du brevet:
**28.10.81 Bulletin 81/43**

(84) Etats Contractants Désignés:
**AT BE CH DE FR GB NL**

(56) Documents cités:
**DE - A - 1 549 254**
**DE - A - 2 444 179**
**DE - A - 2 454 319**
**DE - A - 2 510 314**
**DE - C - 1 099 784**
**FR - A - 2 220 317**

(73) Titulaire: **SO.ME.C. s.n.c. di G. & P. CADELLI**
**I-33080 San Quirino - Roiata (Pordenone) (IT)**

(72) Inventeur: **Santarossa, Antonio**
**via Beorchia**
**I-33080 San Quirino (Pordenone) (IT)**

(74) Mandataire: **D'Agostini, Giovanni, Dr.**
**n. 17 via G.Giusti**
**I-33100 Udine (IT)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Machine à classer et à emballer les oeufs à balances fixes.

L'invention concerne une machine à classer et à emballer les oeufs à balances fixes.

Il est connu de sélectionner ou trier les oeufs en fonction de leur poids, en les classant par catégories de poids avec des limites préétablies, puis de les emballer pour l'emmagasinage, le transport et la livraison.

Il est en outre connu de réaliser la sélection ou le triage des oeufs par catégories de poids, avec des machines à sélectionner ou trier, c'est à dire qui classent les oeufs en catégories de poids, comme le montre l'installation de tri pondéral notamment pour oeufs de la demande de brevet d'invention française FR—A—2220317.

On sait en outre qu'une fois la sélection des oeufs faite on doit pourvoir à leur emballage selon leurs catégories dans des emballages différents; ce travail s'effectue aujourd'hui avec des machines dites à emballer lesquelles ont pour fonction de "recevoir" les oeufs classés par catégories de poids et de les acheminer vers l'emballage de la catégorie correspondante lequel présente la conformation d'un plateau à plusieurs alvéoles pour caser les oeufs tout près les uns des autres sans qu'ils ne se touchent ni ne se brisent; ce type d'emballage s'appelle "plateau" et il est conformé de manière à recevoir les oeufs qui tombent sur lui dans chaque alvéole. Pour pallier à la complexité d'une installation avec une pluralité de machines, on a déjà réalisé des machines universelles qui effectuent les deux susdites opérations c'est à dire le classement et l'emballage des oeufs ainsi classés.

Il est en outre connu que le premier type de machines dites à trier ou sélectionner effectue le pesage avec une pluralité de balances fixes, mais ce type-là ne réalise pas l'emballage tandis que le second type de machines est principalement mécanique (voir par ex. DE—C—1099784), ou est réalisé avec un système de commande électronique (voir par ex. DE—A—2510314). En se référant à ces deux types de machines:

— dans un premier cas on prévoit une pluralité de balances mobiles avec les oeufs transportés par ces balances et où chaque balance se déplace selon un chemin fonction du poids de l'oeuf et, ainsi classé, l'oeuf est acheminé directement à l'emballage;

— dans un deuxième cas les balances son fixes mais la commande est très complexe parce que les machines ont aussi une mémoire électronique fixe pour mémoriser le poids de chaque ouef pesé par la balance correspondante et établir le classement de l'oeuf en l'acheminant dans le chemin qui le fait tomber dans le plateau correspondant à la catégorie de poids établi. Le premier type à une seule opération (triage ou emballage) exige pour les deux opérations plus de place que le second dit universel. Les machines universelles ont l'avantage de réaliser les deux opérations "triage + emballage" mais elles ont le désavantage de'être compliquées et coûteuses, et en outre leur vitesse n'est pas grande.

La présente invention a pour but d'éviter ces inconvénients, et particulièrement l'invention, telle quelle est caractérisée dans les revendications, résout le problème consistant à créer une machine à balances fixes qui réunit les deux opérations sans être encombrante, étant de réalisation très simple, en utilisant des mémoires indépendantes, une pour chaque transport d'oeuf, exclusivement mécaniques, permettant le classement en plusieurs lignes sans réduire la vitesse de classement et d'emballage, avec l'avantage que, si l'on brise un oeuf par accident, cela ne brisera pas d'autre oeufs dans la ligne de transfert comme pour les machines connues car dans ces machines on fait tomber dans le plateau en ensemble de "n" oeufs à la fois.

Dans ce qui suit, l'invention est exposée plus en détail à l'aide des dessins représentant seulement un mode d'exécution.

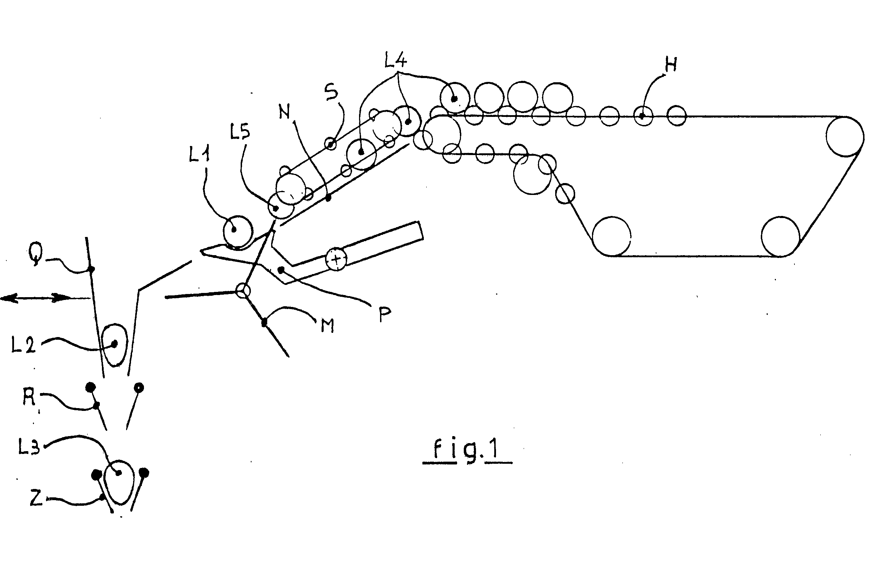

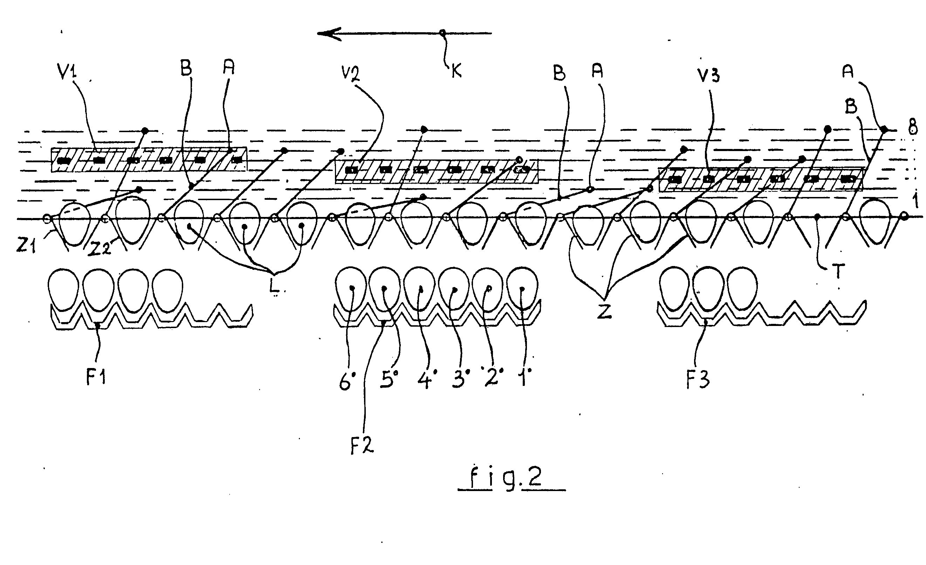

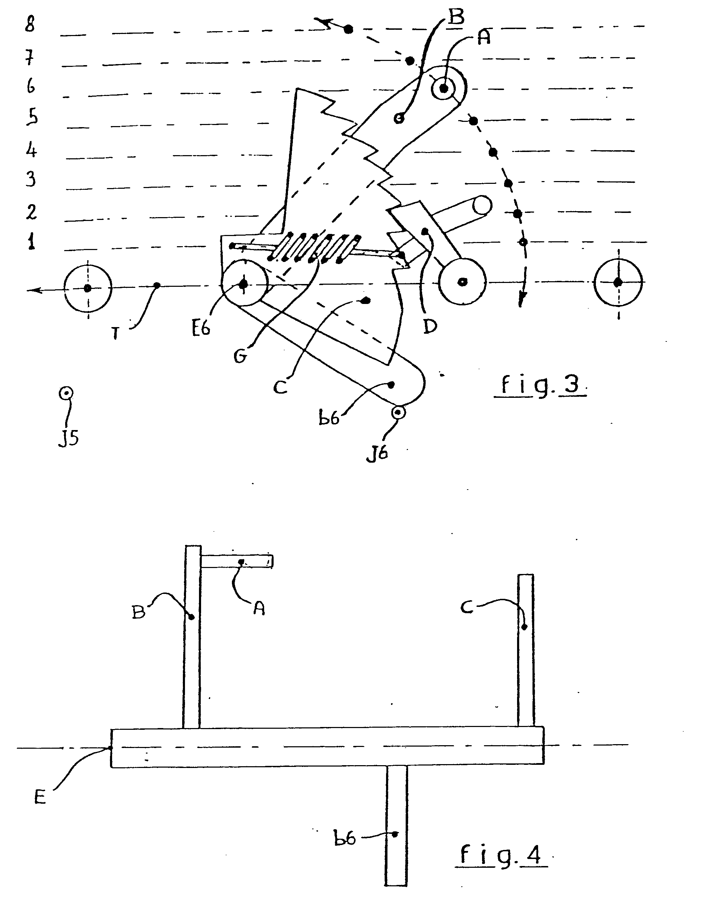

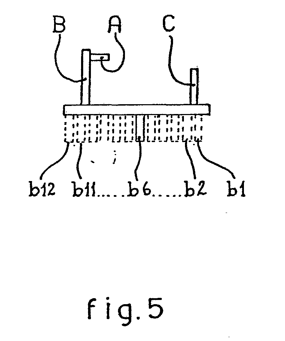

La figure 1 représente une vue schématique en élévation de côté de la partie de la machine qui opère le classement ou la sélection; la figure 2 représente en vue schématique en élévation de côté du transporteur d'oeufs avec ses petites mains au niveau des dispositifs de déchargement des oeufs sur les plateaux; la fig. 3 représente une vue schématique en élévation de côté engrandie d'un dispositif à mémoire indépendante qui accompagne chaque petite main du transporteur de la fig. 2; la fig. 4 représente une vue schématique frontale due dispositif à mémoire de la figure 3; la figure 5 représente en vue d'élévation schématique frontale le dispositif à mémoire de la figure 4 où le levier de commande $b$ qui reçoit la mémorisation est placé dans différentes positions pour recevoir l'ordre de chaque balance et élever le têton $A$ au niveau correspondant à la catégorie de classement de chaque oeuf pesé.

Dans les susdites figures il apparaît que la machine comprend (en commençant par la fig. 1):

— un transporteur à rouleaux $H$ en amont à "n" lignes (sur les figures 1, 2 on en voit une seule, car les autres sont coplanaires), parallèles entre elles, d'alimentation des oeufs;

— une première glissière $N$ avec les mêmes "n" lignes d'avancement, pour recevoir à l'aide d'une chaîne supérieure $S$, "n" oeufs espacés les uns des autres $L\,4$ et acheminés parallèlement en files ou rangs correspondants aux lignes du transporteur en amont;

— une série de "n" balances fixes $P$ placées en aval de la glissière $N$ en ligne transversale (on n'en voit qu'une parce que la figure 1 est une vue de côté) par rapport au chemin des oeufs qui avancent, ces balances étant capables de recevoir un oeuf à la fois sur chacune d'elles;

— un croisillon $M$ lequel comporte trois palettes rayonnant à 120° et tournant selon un programme pas à pas de 120° pour arrêter les derniers oeufs $L\,5$ de la glissière $N$ afin qu'ils ne tombent pas dans les balances qui sont en train de peser les oeufs $L\,1$ et pour, quand la pesée des oeufs $L\,1$ est terminée, décharger ceux-ci en les transférant des balances $P$ sur:

— une seconde glissière $Q$ conformée à entonnoir pour décharger chaque oeuf $L\,2$, provenant de la balance par le croisillon $M$, "en pied", cette glissière $Q$ étant dotée d'une paroi extérieure mobile, pouvant être éloignée (dans le sens de la flèche) pour faire tomber, sur programme, l'oeuf $L\,2$ sur:

— une série de "n" petites mains mobiles $R$ lesquelles reçoivent les oeufs de chacune file $L\,2$ et les déposent de par leur mouvement alternatif sur:

— un transporteur transversal $T$ doté de: "n" files de petites mains $Z$ comme les précédentes, pouvant s'ouvrir sur commande et capables de recevoir les oeufs $L\,3$ (un oeuf par petite main) et de les transporter au lieu de déchargement; et "n" dispositifs à mémoire avec têton $A$ pouvant être positionnés à différents niveaux, flanquant chaque petite main $Z$ comme dans la figure 2 (voir aussi les figures 3, 4, 5).

Le têton $A$ est porté par un bras $B$ qui tourne autour de l'axe $E$ coaxial à chaque petite main $Z$ et cet axe porte, dans la partie inférieure du dispositif à mémoire, soudé en différentes positions $b1$, $b2$,....$bn$, un levier de commande (figure 5) de la position du têton $A$ par la balance $P$ lors de la pesée correspondante.

Cette position est maintenue par le mécanisme de la figure 3 qui comprend un ressort $G$, un arc denté $C$ et un encliquetage $D$ de manière que le levier $b$ (dans le cas spécifique "b6) sur commande de la balance correspondante qui a pesé l'oeuf, au passage du dispositif à mémoire, élève d'un certain niveau (1, 2,....8) le têton $A$ selon la catégorie de poids de l'oeuf pesé.

Chaque balance $P$ lors de la pesée fait sortir un positionneur $J$ qui est placé à un niveau correspondant aux niveaux (1, 2,....8) pour placer le têton $A$ (voir figure 3), où l'on voit seulement deux positionneurs $J5$ et $J6$ (le type de commande n'est pas illustré parce qu'il est bien connu et réalisable très facilement par l'homme de la technique). Avant de passer sur les positionneurs $J$, chaque mémoire passera sous un dispositif de mise au zéro (pas indiqué) qui abaisse tous les bras $B$ avec les têtons $A$, en les ramenant au zéro. Naturellement les positionneurs $J$ sont au nombre de "n" comme les balances $P$ qui les commandent et correspondent aux positions des leviers (b1, b2, b3,.... bn) qui se meuvent avec le transporteur $T$, flanqués par les petites mains $Z$ correspondantes en files transversales (Z1, Z2,.... Zn).

Naturellement les nombre "n" est de préférence égal à 6 ou 12.

## Revendications

1. Machine à classer et à emballer les oeufs, du type comprenant:
— un dispositif de chargement (H, S, N,) d'oeufs à une ou plusieures lignes d'alimentation (1,.... n);
— une série de balances (P) capables de recevoir en position fixe chacun oeuf de chaque ligne (1,.... n) du dispositif de chargement (H, S, N) et de transmettre une commande du poids relevé;
— un transporteur (T) comportant au moins une file de petites mains ouvrables (Z) et pouvant recevoir les dits oeufs provenant des dites balances par un dispositif de transfert (M, Q, R);
— au moins un dispositif de commande (V) du déchargement de chaque oeuf sur le plateau d'une série de plateaux à alvéoles (F) par l'ouverture de la petite main correspondante, chaque plateau devant recevoir des oeufs d'une même catégorie de poids, ce dispositif (V) étant actionnable par des dispositifs de mémorisation du poids de chaque oeuf en fonction de sa catégorie; caractérisée en ce que les dits dispositifs de mémorisation consistent en une série de mémoires mécaniques déplaçables, chacune avec l'oeuf correspondant placé dans une petite main (Z), chaque dispositif de mémorisation étant doté d'un têton (A) positionné par la balance (P) qui a pesé l'oeuf correspondant, et le dit têton (A) pouvant actionner le dispositif de commande (V) de la chute de l'oeuf sur le plateau (F) correspondant à la catégorie de poids en fonction de la position du dit têton.

2. Machine selon 1, caractérisée en ce que chaque têton (A) est positionné par la balance correspondante (P) sur le transporteur (T) à un niveau déterminé, ce niveau étant conservé jusqu'au déchargement de l'oeuf et commandant ledit déchargement.

3. Machine selon 1 et 2, caractérisée en ce que chaque mémoire avec son têton (A) est placée sur le transporteur (T) de manière à flanquer chaque petite main (Z).

4. Machine selon 1, 2, 3; caractérisée en ce que le dit dispositif de transfert (M, Q, R) est constitué par un croisillon (M) à trois palettes rayonnant à 120° entre elles, rotatives selon une avance pas à pas de 120° pour arrêter les oeufs (L 5) provenant du dit dispositif de chargement qui se termine par une glissière d'alimentation (N) et pour placer chaque oeuf (L1) dans les balances (P), et en ce que la croisillon est suivi par une seconde glissière à entonnoir vertical (Q) qui reçoit les oeufs (L2) provenant des balances (P) par le croisillon (M) en les acheminant "en pied", car elle est dotée d'une paroi pouvant être éloignée pour faire tomber l'ouef (L2) sur d'autres petites mains mécaniques (R) mobiles, de même nombre que les balances (P), ces autres petites mains (R) ayant un mouvement alternatif pour déposer les oeufs sur les petites mains (Z) du transporteur (T).

## Claims

1. Egg sorting and packing machine comprising:
— eggs charging means (H, S, N) adapted to convey eggs in a plurality of conveying pathways (1, . . . . n);
— a plurality of fixed balance means (P) effective to receive eggs from each conveying pathway (1, . . . . n) of charging means (H, S, N) and effective to transmit a command depending from each egg weight;
— a conveyor (T) comprising at last a row of egg gripper means (Z) to receive each egg from each balance by intermediate transfer means (M, Q, K);
— at last a discharging command means (V) to open each said gripper to release his egg on a single cell of flat (F) of a plurality of flats comprising each flat a plurality of cells, placing the eggs in accordance with the respective class egg weight in different flats, wherein said discharging command means (V) is actuated by memory means of weight of each egg in accordance with his class; characterized in that the same memory means concern a plurality of movable mechanical memory means corresponding in his movement with a correspondent egg, positioned in a correspondent egg gripper (Z), each mechanical memory means comprising a pin (A) displaced by a corresponding balance means (P) that weighted the respective correspondent egg, and wherein said pin (A) actuate said discharging command means (V) to release said correspondent egg depending on his displacement level on the correspondent class weight flat (F).

2. A machine as claimed in claim 1 and 2 in which each pin (A) is displaced by balance means (P) on the conveyor (T) at a predetermined level depending on the egg weight, being said level maintained within said pin actuate said discharging command means.

3. A machine as claimed in claim 1 and 2 in which each memory with his pin (A) is supported on said conveyor (T) to march side by side to a corresponding gripper (Z).

4. A machine as claimed in claims 1, 2, 3; characterized in that the said intermediate transfer means (M, Q, R) is constituted by a crossarm (M) which has three radial blades 120° apart from each other and turned 120° step by step to stop the last eggs (L 5) from a slide means (N) of said charging means to transfer each egg (L 1) on the balances (P), and wherein said crossarm is followed by a vertical funnel slide means (Q) to receive the eggs (L 2) from said balances (P) by said crossarm (M) to convey each egg "to fall on one's feet", because said funnel slide means comprise a displacing wall to move off said displacing wall from the opposed fixed wall for falling each egg (L 2) on intermediate movable alternative transfer gripper means (R) being this one in the number of said balance means (P), to transfer the eggs on said egg gripper means (Z) placed on said conveyor (T).

## Patentansprüche

1. Eierklassifizierungs- und Eierpackmaschine der Art wie nachstehend erklärt, begreifend:
— eine Beladevorrichtung (H, S, N) mit einer oder verschiedenen Speiseleitungen (I, . . . n);
— eine Anzahl von in Reihe angeordneten Waagen (P), die fähig sind, jedes Ei jeder Leitung (I, . . . n) der Beladevorrichtung (H, S, N) in feststehender Lage aufzunehmen, und die das herausgefundene gewicht betreffende Information zu übertragen;
— einen Eierförderer (T) mit wenigstens einer Reihe von kleinen Greiferschalen (Z), der die von den obengenannten Waagen kommenden Eier durch eine Überführungsvorrichtung (M, Q, R) aufnimmt;
— wenigstens eine Antriebsvorrichtung (V) für die Abgabe jedes Eies auf die Trägerplatte einer Reihe von Schalenplatten (F) durch Aufmachung der entsprechenden kleinen Greiferschale, da jede Platte Eier derselben Gewichtsklasse aufnehmen kann und da diese Vorrichtung dem Gewicht jedes Eies auf Grund seiner Klasse entsprechender Speichervorrichtungen betätigt wird; dadurch gekennzeichnet, dass obengenannte Speichervorrichtungen aus einer Anzahl von in Reihe angeordneten verschiebbaren mechanischen Speichern besteht, die je das entsprechende Ei in einer kleinen Greiferschale abgeben, wobei jede Speichervorrichtung mit einem Abtaststift versehen ist, der durch die Waage (P) in Stellung gebracht wird, die das entsprechende Ei gewogen hat, und wobei der genannte Abtaststift die Antriebsvorrichtung (V) für die Abgabe des Eies auf die Platte (F) betätigen kann, die der Gewichtsklasse nach der Position des erwähnten Abtaststiftes entspricht.

2. Maschine nach Anspruch 1, dadurch gekennzeichnet, dass jeder Abtaststift durch die entsprechende Waage (P) auf dem Eierförderer (T) in einem vorbestimmten Niveau gestellt ist und dass dieses Nievau bis zur Abgabe des Eies erhalten wird und die Abgabe selbst betätigt.

3. Maschine nach Anspruch 1 und 2, dadurch gekennzeichnet, dass jeder Speicher mit seinem Abtaststift auf dem Förderer (T) gestellt ist, so dass er jeder kleinen Greiferschale (Z) parallel angeordnet ist.

4. Maschine nach Anspruch 1, 2, 3, dadurch gekennzeichnet, dass die Überführungsvorrichtung (M, Q, R) aus einer Kreuzstange (M) mit drei Schaufeln besteht, die eine 120 Grad betragende Strahlung untereinander haben und die mit einer Kreisbewegung schrittweise um 120 Grad vorrücken können, um die Eier (L 5) zu stoppen, die von der genannten in einer Speiseleitung (N) ausgehenden Beladevorrichtung kommen, und um jedes Ei (L 1) in den Waagen (P) abzugeben, und dadurch gekennzeichnet, dass der Kreuzstange eine zweite Speiseleitung mit senkrechtem Trichter (Q) folgt, die die von den Waagen (P) kommenden Eier (L 2) durch die Kreuzstange (M) aufnimmt und "aufrecht" auf den Weg bringt, da sie mit einer Wand versehen ist, die entfernt werden kann, um das Ei (L 2) auf weitere kleine verschiebbare mechanische in der gleichen Anzahl der Waagen (P) stehende Greiferschalen (R) abzugeben. Diese weiteren kleinen Greiferschalen (R) haben eine abwechselnde Bewegung, um die Eier auf die kleinen Greiferschalen (Z) des Förderers (T) abzugeben.

fig.1

0006 396

fig.2

fig. 3

fig. 4

3

fig.5